# FASCICULE DE BREVET EUROPEEN

(11) **EP 3 115 255 B1**
(45) Date de publication et mention de la délivrance du brevet: **12.05.2021**
(21) Numéro de dépôt: 16176577.1
(22) Date de dépôt: 28.06.2016
(51) Int. Cl.: B60Q 1/00

(54) **BLOC OPTIQUE DE VÉHICULE À BOÎTIER, DONT UNE PAROI EST MUNIE DE PATTE(S) DE GUIDAGE DE FAISCEAU(X) ÉLECTRIQUE(S)**
FAHRZEUGLEUCHTE MIT GEHÄUSE, AN DESSEN WAND STEGE ZUR FÜHRUNG ELEKTRISCHE LEITUNGEN ANGEBRACHT SIND
VEHICLE LIGHTING DEVICE WITH HOUSING, WHOSE WALL IS EQUIPPED WITH TAB(S) FOR GUIDING WIRING HARNESS(ES)

(30) Priorité: 10.07.2015 FR 1556547
(43) Date de publication de la demande: 11.01.2017
(73) Titulaire: PSA Automobiles SA, 78300 Poissy (FR)
(72) Inventeur: PERON, Rodolphe, 95220 Herblay (FR)

(56) Documents cités:
- GB-A- 2 331 145
- JP-A- 2012 216 442
- US-A1- 2004 114 389

## Description

L'invention concerne les blocs optiques de véhicule qui comprennent un boîtier auquel est solidarisé au moins un équipement destiné à contrôler au moins une fonction photométrique d'éclairage, de signalisation ou de décoration.

Certains blocs optiques de véhicule, éventuellement de type automobile, comprennent un boîtier comportant une paroi ayant une face externe sur laquelle est solidarisé au moins un équipement de contrôle chargé de contrôler au moins une fonction photométrique (d'éclairage, de signalisation ou de décoration). Chaque équipement de contrôle se présente généralement sous la forme d'une carte à circuits intégrés munie d'au moins un connecteur pour le raccordement d'au moins un faisceau électrique. Cette solidarisation sur la face externe de la paroi est destinée à faciliter la réparation ou le remplacement de l'équipement de contrôle.

Afin que le contrôle précité puisse être assuré, la paroi du boîtier comprend au moins un trou permettant le passage d'au moins un faisceau électrique interconnectant l'équipement de contrôle à au moins un élément participant à une fonction photométrique. Le trajet prévu d'un faisceau électrique à l'intérieur du boîtier s'avère souvent complexe du fait de l'encombrement interne et de l'exiguïté. De plus, l'installation du faisceau électrique sur ce trajet prévu s'avère compliquée du fait qu'il est dimensionné au plus juste pour éviter une surcharge pondérale et un surcoût. Par conséquent, les techniciens qui procèdent à l'installation des faisceaux électriques sont contraints d'ajouter des agrafes dans le boitier pour les guider correctement de leur équipement de contrôle jusqu'à un élément participant à une fonction photométrique, ce qui ralentit et complexifie l'installation, et induit un surcoût.

Un bloc optique selon le préambule de la revendication 1 est connu du document US 2004/114389 A1. L'invention a donc notamment pour but d'améliorer la situation.

Elle propose notamment à cet effet un bloc optique destiné à équiper un véhicule et comprenant un boîtier comportant une paroi présentant une face externe à laquelle est destiné à être solidarisé au moins un équipement de contrôle propre à contrôler au moins une fonction photométrique et munie d'au moins un trou propre à permettre le passage d'au moins un faisceau électrique interconnectant l'équipement de contrôle à au moins un élément participant à une fonction photométrique.

La paroi du boîtier comprend au moins une patte de guidage obturant partiellement le trou dans une zone prédéfinie et présentant une forme propre à définir un lieu de passage obligé pour au moins un faisceau électrique et à contraindre un trajet suivi par ce dernier à l'intérieur du boîtier.

Ce bloc optique se caractérise par le fait que la patte de guidage s'étend uniquement dans le plan de la paroi.

Grâce à chaque patte de guidage, une partie au moins du trajet du faisceau électrique associé est désormais contrainte, ce qui facilite notablement l'installation de ce dernier et évite d'avoir à utiliser des agrafes rapportées.

Le bloc optique selon l'invention peut comporter d'autres caractéristiques qui peuvent être prises séparément ou en combinaison, et notamment :
- chaque patte de guidage peut faire partie intégrante de la paroi ;
- la paroi peut comprendre au moins deux pattes de guidage obturant partiellement le trou respectivement dans des zones prédéfinies différentes ;
- chaque patte de guidage peut présenter une forme curviligne définissant un espace concave définissant son lieu de passage obligé.

L'invention propose également un véhicule, éventuellement de type automobile, et comprenant au moins un bloc optique du type de celui présenté ci-avant.

D'autres caractéristiques et avantages de l'invention apparaîtront à l'examen de la description détaillée ci-après, et des dessins annexés (obtenus en CAO/DAO (« Conception Assistée par Ordinateur/Dessin Assisté par Ordinateur »), d'où le caractère apparemment discontinu de certaines lignes), sur lesquels :
- la figure 1 illustre schématiquement, dans une vue en perspective, une petite partie d'un exemple de bloc optique selon l'invention,
- la figure 2 illustre schématiquement, dans une vue en perspective du côté de la face interne, une partie d'un premier exemple de paroi de boîtier de bloc optique selon l'invention, équipée d'une patte de guidage au niveau d'un trou de passage d'un faisceau électrique,
- la figure 3 illustre schématiquement, dans une vue en perspective du côté de la face interne, une partie d'un deuxième exemple de paroi de boîtier de bloc optique selon l'invention, équipée de deux pattes de guidage au niveau d'un trou de passage de faisceaux électriques, et
- la figure 4 illustre schématiquement, dans une vue en perspective du côté de la face interne, une partie d'un troisième exemple de paroi de boîtier de bloc optique selon l'invention, équipée de trois pattes de guidage au niveau d'un trou de passage de faisceaux électriques.

L'invention a notamment pour but de proposer un bloc optique BO destiné à équiper un véhicule et comprenant un boîtier BB auquel est solidarisé, à l'extérieur, au moins un équipement de contrôle EC chargé de contrôler au moins une fonction photométrique (d'éclairage, de signalisation ou de décoration).

Dans ce qui suit, on considère, à titre d'exemple non limitatif, que le bloc optique BO est destiné à équiper un véhicule de type automobile. Mais l'invention n'est pas limitée à ce type de véhicule. Elle concerne en effet tout type de véhicule, qu'il soit terrestre, fluvial (ou maritime), ou aérien, et comportant au moins un bloc optique.

On notera que le bloc optique BO peut être aussi bien un phare (ou projecteur avant), qu'un feu arrière.

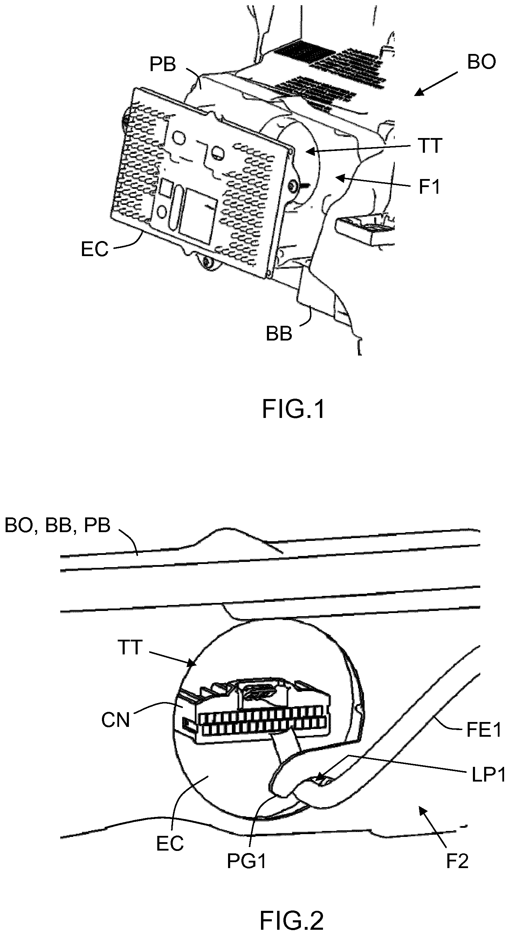

On a schématiquement illustré sur la figure 1 une petite partie d'un exemple de bloc optique BO selon l'invention. Comme illustré, ce bloc optique BO comprend un boîtier BB qui délimite au moins un espace interne logeant au moins partiellement au moins un dispositif d'éclairage participant à au moins une fonction photométrique (d'éclairage, de signalisation ou de décoration).

A titre d'exemple non limitatif, une fonction photométrique d'éclairage peut être une fonction de feu de croisement (ou code), une fonction de feu antibrouillard, ou une fonction de feu de route.

Egalement à titre d'exemple non limitatif, une fonction photométrique de signalisation peut être une fonction d'indicateur de changement de direction (ou clignotant), une fonction de feu de stop, une fonction de feu de position (ou veilleuse ou encore lanterne), une fonction de feu de jour (ou DRL (pour « Daytime running Light (or Lamp) » - signalisation lumineuse allumée automatiquement lorsque le véhicule est mis en fonctionnement pendant le jour)), ou une fonction d'accueil (ou de courtoisie).

Chaque dispositif d'éclairage comprend au moins un élément électrique ou électronique participant à au moins une fonction photométrique, et par conséquent devant être connecté, directement ou indirectement, à au moins un faisceau électrique FEj également connecté à un équipement de contrôle EC chargé de contrôler son fonctionnement. Par exemple, un tel élément électrique ou électronique peut comprendre au moins une source de lumière constituée d'au moins un ensemble de diode(s) électroluminescente(s) (ou LEDs) ou de diode(s) laser.

Comme illustré, chaque équipement de contrôle EC est solidarisé fixement sur la face externe F1 d'une paroi PB du boîtier BB.

Dans ce qui précède et ce qui suit, les mots « externe » et « interne » qualifient des positions respectivement à l'extérieur et à l'intérieur du boîtier BB.

Comme illustré sur les figures 1 à 4, la paroi PB comprend au moins un trou TT propre à permettre le passage d'au moins un faisceau électrique FEj interconnectant un équipement de contrôle EC à au moins un élément participant à une fonction photométrique du bloc optique BO.

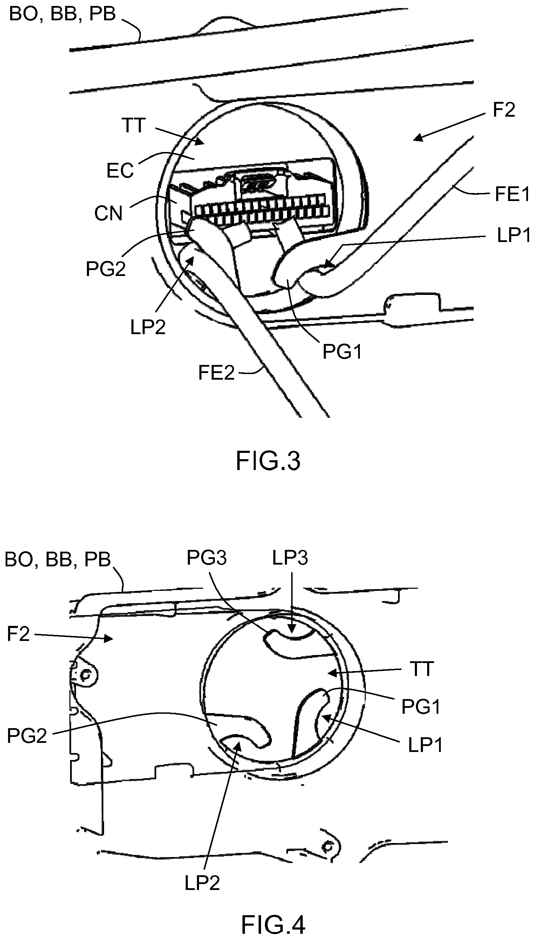

Par exemple, et bien que cela n'apparaisse pas sur les figures 2 et 3, chaque extrémité d'un faisceau électrique FEj peut être munie d'un connecteur destiné à être couplé à un connecteur CN de l'équipement de contrôle EC associé ou de l'élément associé.

Vu de l'extérieur du boîtier BB, l'équipement de contrôle EC peut éventuellement masquer partiellement ou totalement le trou TT. Mais cela n'est pas obligatoire. Il pourrait en effet être solidarisé à côté du trou TT, sans le masquer.

On notera que dans les exemples non limitatifs illustrés sur les figures 1 à 4, la paroi PB ne comprend qu'un seul trou TT permettant le passage d'au moins un faisceau électrique FEj. Mais elle pourrait comprendre plusieurs (au moins deux) trous TT. Par ailleurs, le boîtier BB pourrait comporter plusieurs parois comprenant chacune au moins un trou TT propre à permettre le passage d'au moins un faisceau électrique FEj.

Selon l'invention, la paroi PB comprend également au moins une patte de guidage PGk qui obture partiellement le trou TT (ou l'un des trous) dans une zone prédéfinie et qui présente une forme propre à définir un lieu de passage obligé LPk pour au moins un faisceau électrique FEj et à contraindre un trajet suivi par ce dernier (FEj) à l'intérieur du boîtier BB.

Dans l'exemple illustré non limitativement sur la figure 2, la paroi PB comprend une unique patte de guidage PG1 (k = 1) obturant partiellement le trou TT dans une unique zone prédéfinie et présentant une forme définissant un lieu de passage obligé LP1 pour un unique faisceau électrique FE1 (j = 1). On comprendra qu'une fois qu'une partie de ce faisceau électrique FE1 a été placée dans le lieu de passage obligé LP1, le trajet du reste de ce faisceau électrique FE1 dans le boîtier BB, entre ce lieu de passage obligé LP1 et l'élément auquel il doit être connecté, est contraint. La position de ce lieu de passage obligé LP1 définit ainsi la direction que devra suivre, au moins initialement, le faisceau électrique FE1 dans le boîtier BB, pour atteindre le connecteur de l'élément associé.

Dans l'exemple illustré non limitativement sur la figure 3, la paroi PB comprend deux pattes de guidage PG1 et PG2 (k = 1 ou 2) obturant partiellement le trou TT dans deux zones prédéfinies différentes et présentant respectivement des formes définissant deux lieux de passage obligés LP1 et LP2 pour deux faisceaux électriques FE1 et FE2 (j = 1 ou 2). On comprendra qu'une fois que deux parties respectives de ces deux faisceaux électriques FE1 et FE2 ont été placées dans les lieux de passage obligés LP1 et LP2 correspondants, les trajets des restes de ces faisceaux électriques FE1 et FE2 dans le boîtier BB, respectivement entre ces lieux de passage obligés LP1 et LP2 et les éléments auxquels ils doivent être connectés, sont contraints. Les positions respectives de ces lieux de passage obligés LP1 et LP2 définissent ainsi les directions différentes que devront suivre respectivement, au moins initialement, les faisceaux électriques FE1 et FE2 dans le boîtier BB, pour atteindre les connecteurs des éléments associés.

Dans l'exemple illustré non limitativement sur la figure 4, la paroi PB comprend trois pattes de guidage PG1 à PG3 (k = 1 à 3) obturant partiellement le trou TT dans trois zones prédéfinies différentes et présentant respectivement des formes définissant trois lieux de passage obligés LP1 à LP3 pour au moins trois faisceaux électriques non représentés.

On notera, bien que cela n'apparaisse pas sur les figures 2 et 3, que l'une au moins des pattes de guidage PGk peut éventuellement présenter une forme propre à définir un lieu de passage obligé LPk pour au moins deux faisceaux électriques FEj et à contraindre chaque trajet suivi par ces faisceaux électriques FEj à l'intérieur du boîtier BB. Dans ce cas, les différents faisceaux électriques FEj contraints par un même lieu de passage obligé LPk peuvent éventuellement avoir des trajets différents pour atteindre des éléments différents.

Comme illustré non limitativement sur les figures 2 à 4, chaque patte de guidage PGk peut avantageusement faire partie intégrante de la paroi PB. Dans ce cas, la paroi PB (ou le boîtier BB) est réalisé avec chaque patte de guidage PGk par moulage dans un matériau plastique (ou synthétique). Mais, selon un exemple de réalisation qui ne fait cependant pas partie de la présente invention, chaque patte de guidage PGk pourrait éventuellement être rapportée fixement (par exemple par soudage, vissage ou collage) sur la face interne F2 de la paroi PB au voisinage de la périphérie du trou TT qu'elle doit obturer partiellement.

Egalement comme illustré non limitativement sur les figures 2 à 4, chaque patte de guidage PGk peut avantageusement présenter une forme curviligne qui définit un espace concave définissant son lieu de passage obligé LPk. Chaque patte de guidage PGk constitue alors une espèce de crochet propre à retenir au moins un faisceau électrique FEj dans l'espace concave définissant son lieu de passage obligé LPk. On notera qu'une même patte de guidage PGk peut éventuellement présenter une forme curviligne définissant au moins deux espaces concaves définissant deux lieux de passage obligés LPk pour plusieurs faisceaux électriques FEj.

L'invention offre plusieurs avantages, parmi lesquels :
- un bon guidage des faisceaux électriques en sortie des équipements de contrôle puis en entrée de boîtier,
- une installation plus facile, plus reproductible et moins onéreuse des faisceaux électriques,
- une réduction des coûts des blocs optiques du fait que l'on n'a plus besoin d'utiliser des agrafes.

## Revendications

1. Bloc optique (BO) destiné à équiper un véhicule et comprenant un boîtier (BB) comportant une paroi (PB) présentant une face externe (F1) à laquelle est propre à être solidarisé au moins un équipement de contrôle (EC) propre à contrôler au moins une fonction photométrique et munie d'au moins un trou (TT) propre à permettre le passage d'au moins un faisceau électrique (FEj) interconnectant ledit équipement de contrôle (EC) à au moins un élément participant à ladite fonction photométrique, ladite paroi (PB) comprenant au moins une patte de guidage (PGk) obturant partiellement ledit trou (TT) dans une zone prédéfinie et présentant une forme propre à définir un lieu de passage obligé (LPk) pour au moins un faisceau électrique (FEj) et à contraindre un trajet suivi par ce dernier (FEj) à l'intérieur dudit boîtier (BB), **caractérisé en ce que** ladite au moins une patte de guidage (PGk) s'étend uniquement dans le plan de la paroi (PB).

2. Bloc optique selon la revendication 1, **caractérisé en ce que** chaque patte de guidage (PGk) fait partie intégrante de ladite paroi (PB).

3. Bloc optique selon l'une des revendications 1 et 2, **caractérisé en ce que** ladite paroi (PB) comprend au moins deux pattes de guidage (PGk) obturant partiellement ledit trou (TT) respectivement dans des zones prédéfinies différentes.

4. Bloc optique selon l'une des revendications 1 à 3, **caractérisé en ce que** chaque patte de guidage (PGk) présente une forme curviligne définissant un espace concave définissant ledit lieu de passage obligé (LPk).

5. Véhicule, **caractérisé en ce qu'**il comprend au moins un bloc optique (BO) selon l'une des revendications précédentes.

6. Véhicule selon la revendication 5, **caractérisé en ce qu'**il est de type automobile.

## Patentansprüche

1. Optische Einheit (BO), die dazu bestimmt ist, in ein Fahrzeug eingebaut zu werden, und die ein Gehäuse (BB) umfasst, das eine Wand (PB) mit einer Außenfläche (F1) aufweist, an der mindestens eine Steuereinrichtung (EC) befestigt werden kann, die geeignet ist, mindestens eine photometrische Funktion zu steuern, und die mit mindestens einem Loch (TT) versehen ist, das geeignet ist, den Durchgang mindestens eines elektrischen Strahls (FEj) zu ermöglichen, der die Steuereinrichtung (EC) mit mindestens einem Element verbindet, das an der photometrischen Funktion beteiligt ist, wobei die Wand (PB) mindestens eine Führungslasche (PGk) umfasst, die sich in der Ebene der Wand (PB) erstreckt und das Loch (TT) in einem vorbestimmten Bereich teilweise verschließt und eine Form hat, die sich von derjenigen der Wand (PB) unterscheidet, wobei die Wand (PB) mindestens eine Führungslasche (PGk) umfasst, die sich in der Ebene der Wand (PB) erstreckt und das Loch (TT) in einem vordefinierten Bereich teilweise verschließt und eine Form aufweist, die geeignet ist, einen obligatorischen Durchgangsort (LPk) für mindestens einen elektrischen Strahl (FEj) zu definieren und einen Weg zu erzwingen, dem dieser (FEj) im Inneren des Gehäuses (BB) folgt, **dadurch gekennzeichnet, dass** sich die mindestens eine Führungslasche (PGk) ausschließlich in der Ebene der Wand (PB) erstreckt.

2. Optischer Block nach Anspruch 1, **dadurch gekennzeichnet, dass** jede Führungslasche (PGk) einstückig mit der Wand (PB) ist.

3. Optischer Block nach einem der Ansprüche 1 und 2, **dadurch gekennzeichnet, dass** die Wand (PB) mindestens zwei Führungslaschen (PGk) aufweist, die das Loch (TT) jeweils in verschiedenen vordefinierten Bereichen teilweise verschließen.

4. Optischer Block nach einem der Ansprüche 1 bis 3, **dadurch gekennzeichnet, dass** jede Führungslasche (PGk) eine gekrümmte Form aufweist, die einen konkaven Raum definiert, der den erzwungenen Durchgangsplatz (LPk) begrenzt.

5. Fahrzeug, **dadurch gekennzeichnet, dass** es mindestens eine optische Einheit (BO) nach einem der vorhergehenden Ansprüche umfasst.

6. Fahrzeug nach Anspruch 5, **dadurch gekennzeichnet, dass** es von der Art eines Automobils ist.

## Claims

1. Optical block (BO) intended to be fitted to a vehicle and comprising a casing (BB) comprising a wall (PB) having an external face (F1) to which at least one piece of control equipment (EC) suitable for controlling at least one photometric function can be attached and provided with at least one hole (TT) suitable for allowing the passage of at least one electric beam (FEj) interconnecting the said control equipment (EC) to at least one element participating in the said photometric function, the said wall (PB) comprising at least one guide lug (PGk) extending in the plane of the wall (PB) and partially closing the said hole (TT) in a predefined zone and having a shape which is different from that of the said wall (PB), said wall (PB) comprising at least one guide tab (PGk) extending in the plane of the wall (PB) and partially closing said hole (TT) in a predefined zone and having a shape suitable for defining an obligatory passage place (LPk) for at least one electric beam (FEj) and for constraining a path followed by the latter (FEj) inside said housing (BB), **characterized in that** said at least one guide tab (PGk) extends only in the plane of the wall (PB).

2. Optical block according to claim 1, **characterized in that** each guide tab (PGk) is integral with said wall (PB).

3. Optical block according to one of claims 1 and 2, **characterized in that** said wall (PB) comprises at least two guide tabs (PGk) partially closing said hole (TT) respectively in different predefined areas.

4. Optical block according to one of claims 1 to 3, **characterized in that** each guide tab (PGk) has a curvilinear shape defining a concave space defining said forced passage place (LPk).

5. Vehicle, **characterized in that** it comprises at least one optical block (BO) according to one of the preceding claims.

6. Vehicle according to claim 5, **characterized in that** it is of the automobile type.
